# EUROPÄISCHE PATENTANMELDUNG

(11) **EP 1 235 422 A2**
(43) Veröffentlichungstag der Anmeldung: **28.08.2002**
(21) Anmeldenummer: 02003742.0
(22) Anmeldetag: 19.02.2002
(51) Int. Cl.: H04N 1/60

(54) **Aufnahmegerät, Verfahren zur Rekonstruktion einer Bildinformation und Verfahren zur Kalibrierung einer Bildinformation**

(30) Priorität: 21.02.2001 DE 10108277
(71) Anmelder: Gassmann, Franz Josef, 45663 Reckinghausen (DE)
(72) Erfinder: Gassmann, Franz Josef, 45663 Reckinghausen (DE)
(74) Vertreter: Laufhütte, Dieter, Dr.-Ing.

(57) **Zusammenfassung**

Die vorliegende Erfindung betrifft ein Aufnahmegerät zur Aufnahme einer Bildinformation. Eine originalgetreue Wiedergabe des Farbeindrucks und/oder der Helligkeit des aufgenommenen Bildes wird erfindungsgemäß dadurch gewährleistet, daß das Aufnahmegerät ein oder mehrere Mittel zur Erzeugung eines Lichtsignals mit bekannter spektraler Intensitätsverteilung und/oder Farbkoordinaten und/oder Helligkeit aufweist, das durch ein in dem Aufnahmegerät angeordnetes oder darin aufnehmbares Aufnahmemedium erfaßbar ist. Die vorliegende Erfindung betrifft ferner ein Verfahren zur Rekonstruktion einer auf einem Aufnahmemedium aufgezeichneten Bildinformation, bei dem die Bildrekonstruktion derart vorgenommen wird, daß die spektrale Intensitätsverteilung und/oder die Farbkoordinaten und/oder die Helligkeit einer auf dem Aufnahmemedium erfaßten und rekonstruierten Lichtsignalinformation der des durch Mittel zur Erzeugung eines Lichtsignals generierten Lichtsignals oder der des zu diesem komplementären Lichtsignals entspricht oder die Abweichung zwischen dem rekonstruierten und dem erzeugten Lichtsignal innerhalb eines Toleranzbereiches liegt oder minimiert wird.

Die vorliegende Erfindung betrifft ferner ein Verfahren zur Kalibrierung einer auf einem Aufnahmemedium aufgezeichneten Bildinformation, bei dem die Abweichung des rekonstruierten Lichtsignals zu dem durch Mittel zur Erzeugung eines Lichtsignals generierten Lichtsignal oder dem zu diesem komplementären Lichtsignal parametrisch erfaßt wird und diese Parameter als Kalibrierungsparameter für die weitere Bildrekonstruktion und/oder Bildverarbeitung bereitgestellt werden.

## Beschreibung

Die vorliegende Erfindung betrifft ein Aufnahmegerät zur Aufnahme einer Bildinformation.

Derartige Aufnahmegeräte sind weithin beispielsweise als Fotokamera, als Filmkamera oder auch als TV-Kamera bekannt. Derartige Aufnahmegeräte enthalten üblicherweise ein Aufnahmemedium, auf das die Bildinformation in bestimmter Weise gespeichert wird. Handelt es sich bei dem Aufnahmegerät beispielsweise um eine Fotokamera, in die ein Farbfilm eingelegt wurde, wird die Bildinformation, d. h. das aufgenommene Objekt in bestimmter Art und Weise, die sowohl von dem Aufnahmegerät selbst als auch von dem Aufnahmemedium abhängen kann, gespeichert. Diese gespeicherte Information wird dann im Labor beispielsweise auf Fotopapier wiedergegeben. Die Bildinformation wird im Falle von Farbfilmen üblicherweise in mehrere spektrale Teilbereiche unterteilt, d. h. zum Beispiel in die Bereiche rot, grün und blau. Diese spektrale Aufteilung kann erreicht werden durch Aufnahmen mit Farbfiltern oder, wie heute üblich, durch Filme mit drei übereinandergegossenen, jeweils für ein Drittel des sichtbaren Spektrums empfindlichen Schichten.

Im Falle der Schwarz-Weiß-Fotografie erfolgt keine derartige spektrale Aufteilung der Bildinformation in Teilbereiche. Die Bildinformation wird hier jedoch in Form von Helligkeitsabstufungen, d. h. in Form von Intensitätswerten, auf dem Aufnahmemedium gespeichert.

Bei der Aufnahme von farbigen Bildinformationen entsteht das Problem, daß die spektralen Bereiche des Aufnahmemediums so entwickelt bzw. reproduziert werden müssen, daß die natürliche Farbgebung der aufgenommenen Bildinformation wieder hergestellt wird. Bei der Reproduktion der Bildinformation ist somit darauf zu achten, daß das Bild weder blau-, noch grün-, noch rotstichig ist, was dadurch entstehen könnte, daß bei der Filmentwicklung die Belichtung der entsprechenden spektralen Bereiche des Aufnahmemediums unzureichend war. Dieser Mangel kann beispielsweise dadurch hervorgerufen werden, daß bei einem Farbfilm die für den blauen Spektralbereich empfindliche Farbschicht gealtert ist und eine dadurch entsprechend geringere Empfindlichkeit aufweist. Bei der Entwicklung eines derartigen Films mittels eines standardisierten Entwicklungsverfahrens führt dies dazu, daß der Blauanteil des aufgenommenen Bildes in der Reproduktion zu gering ist, was bedeutet, daß das reproduzierte Bild grün- oder rotstichig ist.

Der genannte Effekt kann beispielsweise auch dann auftreten, wenn bei einer Digitalkamera die für unterschiedliche spektrale Bereiche empfindlichen Bauelemente unterschiedlichen Temperaturen ausgesetzt sind und damit unterschiedlich empfindlich reagieren. Wird ein mit einer derartigen Kamera aufgenommenes Bild rekonstruiert, kommt es ebenfalls zu dem obengenannten Problem, daß die Farbgewichtung nicht der des ursprünglich aufgenommenen Objektes entspricht.

Bei Schwarz-Weiß-Filmen tritt das Problem auf, daß die Helligkeit der Reproduktion nicht der Helligkeit des aufgenommen Objektes entspricht, d. h. die Leuchtdichte des reproduzierten Bildes ist zu hoch oder zu niedrig, so daß das Bild zu hell oder zu dunkel ausfällt.

Es ist die Aufgabe der vorliegenden Erfindung ein Aufnahmegerät zur Aufnahme einer Bildinformation zu schaffen, mittels dessen zuverlässig, unabhängig von der jeweiligen Beleuchtungssituation, die Farb- bzw. Helligkeitsinformation des aufgenommen Objektes reproduzierbar ist.

Diese Aufgabe wird durch ein Aufnahmegerät zur Aufnahme einer Bildinformation dadurch gelöst, daß das Aufnahmegerät ein oder mehrere Mittel zur Erzeugung eines Lichtsignals mit bekannter spektraler Intensitätsverteilung und/oder Farbkoordinaten und/oder Helligkeit aufweist, das durch einen in dem Aufnahmegerät angeordneten oder darin aufnehmbaren Aufnahmemedium erfaßbar ist. Handelt es sich beispielsweise um einen Farbfilm generieren die genannten Mittel ein Lichtsignal mit bekannter spektraler Intensitätsverteilung bzw. mit bekannten Farbkoordinaten, das auf dem Aufnahmemedium, das sich in dem Aufnahmegerät befindet, aufgenommen wird. Es wird also bei der Aufnahme ein Referenzsignal geschaffen, dessen spektrale Intensitätsverteilung und/oder Farbkoordinaten und/oder Helligkeit bekannt ist und mittels dessen die Aufnahme kalibriert wird. Auf diese Weise ist eine originalgetreue Reproduktion bzw. Entwicklung des Films möglich.

Unter der Bezeichnung Aufnahmegerät sind grundsätzlich alle Geräte zu verstehen, mit dem ein beliebiges Bild aufgenommen werden kann. Für das Lichtsignal ist entscheidend, daß dies in irgendeiner Weise von dem Aufnahmemedium erfaßt werden kann, d. h. daß das Lichtsignal im Empfindlichkeitsbereich des Aufnahmemediums liegt. Es kann, muß jedoch nicht im sichtbaren Bereich liegen. Auch demgegenüber kurzwelliges Licht, beispielsweise UV-Licht, ist einsetzbar. Das Lichtsignal kann z. B. Wellenlängen im sichtbaren Bereich oder im Bereich kürzerer Wellenlängen aufweisen.

Jede Farbe des sichtbaren Bereiches kann durch Farbkoordinaten eindeutig definiert werden. Die Farbkoordinaten stellen gewichtete Farbmaßzahlen dar, mittels derer durch die sogenannte Farbgleichung aufgrund der bekannten Primärvalenzen rot (700 nm), grün (546,1 nm) und blau (435,8 nm) ein beliebiger Farbvektor, d. h. eine beliebige Farbvalenz, dargestellt werden kann. Durch die Angabe der Farbkoordinaten ist jede Farbe genau definiert. Dies gilt nicht nur für die bunten Farben, sondern ebenso für die Farbe weiß, bei der alle Farbkoordinaten gleich groß sind. Das Lichtsignal kann auch in seiner spektralen Intensitätsverteilung bekannt sein. Darunter wird die Intensität des Lichtsignals in Abhängigkeit von der Wellenlänge verstanden. Die absoluten Intensitätswerte können, müssen jedoch nicht, bekannt sein. Es ist ausreichend, die Größe der Intensitäten relativ zueinander in Abhängigkeit von der Wellenlänge zu kennen.

Erfindungsgemäß ist es ebenso möglich, daß das Farbsignal zusätzlich oder alternativ zu den Farbkoordinaten bzw. seiner spektralen Intensitätsverteilung in seiner Leuchtdichte/Helligkeit, d. h. in seiner Intensität, bekannt ist. Auf diese Weise ist sowohl beispielsweise bei Farbfilmen als auch bei Schwarz-Weiß-Filmen eine Helligkeitskalibrierung möglich.

Gemäß einer bevorzugten Ausgestaltung der vorliegenden Erfindung besteht das Lichtsignal aus weißem Licht. Weißes Licht hat die Farbkoordinaten x=y=z=0,33. Zur Erzeugung eines derartigen Lichtsignals können die Mittel zur Erzeugung des Lichtsignals beispielsweise eine Glühlampe aufweisen. Erfindungsgemäß wird somit bei einer Aufnahme ein weißer Lichtfleck erzeugt und auf dem Aufnahmemedium an einer beliebigen Position erfaßt. Dieser weiße Lichtfleck dient als Referenz bei der Reproduktion des Bildes im Labor. Der Entwickler wird hier nun solange die entsprechenden spektralen Bereiche eines Filmes belichten, bis auf dem wiedergegebenen Bild der Punkt entsprechend wieder weiß ist, d. h. wenigstens in etwa die oben angegebenen Farbkoordinaten bzw. die ihm bekannte spektrale Intensitätsverteilung aufweist. Damit ist sichergestellt, daß auch bei einer spektralen Schicht des Farbfilms mit geringerer Empfindlichkeit eine entsprechend angepaßte Entwicklung erfolgt, so daß dieser spektrale Farbenbereich beispielsweise bei verringerter Empfindlichkeit länger belichtet wird.

In weiterer Ausgestaltung der vorliegenden Erfindung ist vorgesehen, daß durch die Mittel zur Erzeugung eines Lichtsignals mehrere getrennte Lichtsignale mit jeweils bekannten Farbkoordinaten erzeugbar sind, die von dem Aufnahmemedium erfaßbar sind.

Die Lichtsignale können räumlich und/oder spektral getrennt sein. Das Lichtsignal kann räumlich getrennt sein und beispielsweise durch drei Leuchtdioden, beispielsweise eine rote, eine grüne und eine blaue erzeugt werden. Ebenso ist es möglich, drei Leuchtdioden, von denen eine rotes Licht, eine grünes Licht und eine blaues Licht abgibt, in einem Element zu vereinigen. Dies führt zwar zu einem im allgemeinen farbigen oder auch weißen Leuchtpunkt, der jedoch drei spektrale Einzelsignale vereinigt. Derartige Elemente, z. B. eine "weiße" LED, eignen sich sehr gut für das erfindungsgemäße Aufnahmegerät.

Durch die Mittel zur Erzeugung eines Lichtsignals können beispielsweise ein rotes, ein grünes und ein blaues Lichtsignal erzeugbar sein. In diesem Fall wird von einem beispielsweise dreichschichtigen Farbfilm jeder spektrale Bereich mit einem Lichtsignal mit bekannten Farbkoordinaten beaufschlagt, so daß auch hier eine entsprechend exakte Entwicklung möglich ist.

Die Lichtsignale können derart ausgeführt sein, daß das rote, das grüne und das blaue Lichtsignale in ihrer Summe weißes Licht ergeben.

Besteht das im Aufnahmegerät erzeugte Lichtsignal aus weißem Licht, hat dies den Vorteil, daß man auch unterschiedliche Beleuchtungssituationen bei korrekter Reproduktion des Lichtsignals entsprechend korrekt im Bild wiedergibt.

In weiterer Ausgestaltung der vorliegenden Erfindung ist vorgesehen, daß durch die Mittel zur Erzeugung eines Lichtsignals ein zu rot komplementäres, ein zu grün komplementäres und ein zu blau komplementäres Lichtsignal erzeugbar sind.

Durch die Mittel zur Erzeugung eines Lichtsignales können Lichtsignale erzeugbar sein, die in ihrer Schwerpunktswellenlänge jeweils zwischen den spektralen Hauptempfindlichkeiten des Aufnahmemediums liegen. Liegen die Schwerpunktswellenlängen des Aufnahmemediums beispielsweise im blauen, grünen, roten Bereich, kann vorgesehen sein, daß die erzeugten Lichtsignale Schwerpunktswellenlängen zwischen den Bereichen blau/grün und zwischen den Bereichen grün/rot aufweisen. Benutzt man beispielsweise ein spektral breites Lichtsignal, d. h. ein Lichtsignal mit breiter Wellenlängenverteilung, zwischen blau und grün sowie zwischen grün und rot, so werden jeweils die Anteile davon im blauen, grünen und roten Empfindlichkeitsbereich des Aufnahmemediums erfaßt, wenn diese Empfindlichkeiten und das Eingangssignal entsprechende Breiten aufweisen, so daß eine Überschneidung möglich ist. Auf diese Weise läßt sich mit zwei spektral breiten Lichtsignalen auch eine Kalibrierung der spektralen Übertragungsfunktion des Aufnahmemediums erreichen.

Gemäß einer bevorzugten Ausgestaltung der vorliegenden Erfindung ist vorgesehen, daß das Aufnahmegerät eine analoge oder digitale Fotokamera, eine analoge oder digitale Filmkamera oder eine TV-Kamera ist. Zu den analogen Fotokameras gehören beispielsweise die gängigen Fotokameras sowie beispielsweise Sofortbildkameras. Zu den digitalen Fotokameras sind beispielsweise CCD-Kameras und CMOS-Kameras zu zählen.

Grundsätzlich ist die vorliegende Erfindung jedoch nicht auf die genannten Aufnahmegeräte beschränkt, sondern bezieht sich auf alle Geräte, mit denen eine beliebige Bildinformation aufgenommen werden kann.

Die Mittel zur Erzeugung eines Lichtsignals können derart ausgeführt sein, daß das Lichtsignal durch seine Helligkeit charakterisiert wird. Eine derartige Ausführungsform ist beispielsweise bei Schwarz-Weiß-Filmen von Bedeutung. Hier erfolgt keine spektrale Aufteilung der Bildinformation im Aufnahmegerät oder im Aufnahmemedium. Bei Schwarz-Weiß-Filmen läßt sich eine genaue Reproduktion dann realisieren, wenn die Helligkeit, d. h. die Leuchtdichte bekannt ist. Zu diesem Zweck wird erfindungsgemäß durch die Mittel zur Erzeugung eines Lichtsignals ein Lichtsignal bekannter Leuchtdichte generiert, das auf dem Aufnahmemedium erfaßt wird. Dabei kann es sich beispielsweise um einen weißen oder auch farbigen Lichtfleck bekannter Intensität handeln. Bei der Entwicklung kann nun der Entwickler die Entwicklung derart steuern, daß bei der Bildreproduktion der Lichtfleck in exakt dieser Helligkeit, d. h. Leuchtdichte erscheint. Eine derartige Helligkeitskalibrierung ist nicht nur bei Schwarz-Weiß-Filmen, sondern ebenfalls bei Farbfilmen denkbar und sinnvoll.

Besonders vorteilhaft ist es, wenn die Mittel zur Erzeugung eines Lichtsignals derart ausgeführt sind, daß zwei oder mehrere voneinander getrennte Lichtsignale unterschiedlicher Helligkeit erzeugbar sind. Wird nur ein Lichtsignal bekannter Leuchtdichte erzeugt, kann der Entwickler gewährleisten, daß Bereiche dieser Helligkeit originalgetreu reproduziert werden. Hierbei ist jedoch zu beachten, daß die Beziehung zwischen der Intensität, d. h. der Leuchtdichte bzw. Helligkeit, und der Farbtiefe jedenfalls in Teilbereichen nicht linear ist. Um die Nichtlinearität dieser Beziehung zu korrigieren kann nun erfindungsgemäß vorgesehen sein, daß zwei oder mehr, beispielsweise drei, voneinander getrennnte Lichtsignale unterschiedlicher Helligkeit erzeugbar sind, so daß eine Farbtiefenkurve erzeugbar ist, die die Beziehung zwischen Farbtiefe und Intensität der Strahlung genau wiedergibt. Auf diese Weise wird gewährleistet, daß beispielsweise bei einem Schwarz-Weiß-Film die Schwärzung über einen weiten Intensitätsbereich den Verhältnissen des aufgenommen Objektes entspricht.

Für einen nicht linearen Verlauf der Belichtungskurve braucht man mindestens drei Punkte auf der Belichtungskurve, durch die man dann entsprechende Geraden legt. Auf diese Weise läßt sich mit drei Punkten und entsprechend diese verbindenden Geraden der nicht lineare Verlauf der Abhängigkeit der Belichtungsenergie von der Schwärzung gut wiedergeben. Reicht eine lineare Annäherung an die Belichtungskurve aus, so benötigt man jedoch nur zwei Punkte, d. h. zwei Lichtsignale unterschiedlicher Helligkeit. Will man auch Nichtlinearitäten erfassen, so sind mindestens drei Meßpunkte für eine Approximation erforderlich.

Die Charakterisierung des Lichtsignals durch seine Helligkeit ist selbstverständlich nicht nur bei Schwarz-Weiß-Filmen einsetzbar, sondern ebenfalls bei Farbfilmen, denn auch bei durch Farbkoordinaten charakterisierten Lichtsignalen gibt es beliebig viele verschiedene Helligkeiten, so daß auch bei Farbfilmen die Leuchtdichte ein alternativ oder zusätzlich zu den Farbkoordinaten zu erfassender Parameter sein kann. Dies gilt ebenso für Lichtsignale, deren spektrale Intensitätsverteilung bekannt ist. Unabhängig davon, ob diese im sichtbaren UVoder IR-Bereich liegen, ist auch hier eine zusätzliche oder alternative Charakterisierung durch die Intensität möglich.

Besonders vorteilhaft ist es, wenn die Lichtsignale weißes Licht unterschiedlicher Helligkeit umfassen.

In weiterer Ausgestaltung der vorliegenden Erfindung ist vorgesehen, daß das Aufnahmegerät oder das Aufnahmemedium derart ausgeführt ist, daß die Erfassung der Bildinformation in mehreren spektralen Bereichen erfolgt. Eine derartige spektrale Zerlegung der Bildinformation ist beispielsweise bei Farbfilmen üblich. Beispielsweise ist es möglich, daß drei spektrale Kanäle vorgesehen sind, von denen einer den Rotanteil, einer den Grünanteil und einer den Blauanteil des aufgenommenen Objektes erfaßt. Um beispielsweise ein weißes Lichtsignal zu erhalten, müssen die Wellenlängen der einzelnen Farben sowie das Verhältnis der Intensitäten zueinander entsprechend aufeinander abgestimmt sein. Sind nicht nur das Verhältnis der Intensitäten, sondern auch die absoluten Werte der einzelnen Intensitäten des roten, grünen und blauen Lichtes bekannt, so erhält man in der Summe nicht nur ein weißes Lichtsignal, sondern zusätzlich ein weißes Lichtsignal mit der originalen Helligkeit des in dem Aufnahmegerät erzeugten und auf dem Aufnahmemedium aufgenommenen Lichtsignal.

In weiterer Ausgestaltung der vorliegenden Erfindung ist vorgesehen, daß die Erfassung der Bildinformation in den drei spektralen Bereichen rot, grün und blau oder dazu komplementären Bereichen oder zwischen den Bereichen blau/grün und grün/rot oder dazu komplementären Bereichen erfolgt und die Mittel zur Erzeugung eines Lichtsignals derart ausgeführt sind, daß das Lichtsignal in jedem dieser spektralen Bereiche erfaßbar ist.

Hier wäre es beispielsweise denkbar, daß das Lichtsignal einen weißen Lichtfleck darstellt, der sich aus entsprechenden Rot-, Grün- und Blauanteilen zusammensetzt. Auf diese Weise wird sichergestellt, daß jeder der spektralen Bereiche des Aufnahmemediums kalibriert wird.

In einer bevorzugten Ausgestaltung der vorliegenden Erfindung ist die Bildinformation als Schwarz-Weiß-Bild erfaßbar und durch die Mittel zur Erzeugung eines Lichtsignals sind wenigstens zwei weiße Lichtsignale unterschiedlicher Helligkeit erzeugbar. Will man die Nichtlinearität der Abhängigkeit der Schwärzung von der Intensität, d. h. der Leuchtdichte, berücksichtigen, sind mindestens drei weiße Lichtsignale unterschiedlicher Helligkeit zu erzeugen. Durch die erfindungsgemäße Ausgestaltung der vorliegenden Erfindung kann insbesondere bei noch mehr als zwei weißen Lichtsignalen eine besonders genaue Schwärzungskurve aufgenommen werden, wodurch die besonders exakte Reproduktion der Helligkeiten des aufgenommenen Objektes möglich ist.

Die Mittel zur Erzeugung eines Lichtsignals können Leuchtdioden, Glühlampen, Laserdioden, Floureszenzdioden, Lumineszenzdioden, Glimmlampen oder andere Leuchtmittel umfassen.

In weiterer Ausgestaltung der Erfindung ist vorgesehen, daß die Mittel zur Erzeugung eines Lichtsignals einen oder mehrere zwischen Leuchtmittel und Aufnahmemedium angeordnete Farb- und/oder Intensitätsfilter aufweisen. Auf diese Weise ist es möglich, beispielsweise von dem weißen Licht der Glühbirne bestimmte spektrale Bereiche auszublenden und nur diese zur Kalibrierung zu verwenden. Ebenfalls wäre es möglich, das weiße Licht der Glühbirne in drei spektrale Bereiche zu zerlegen, und hier entsprechend drei unterschiedliche Lichtsignale zu erzeugen, die durch das Aufnahmemedium erfaßt werden können.

Die vorliegende Erfindung betrifft ferner ein Verfahren zur Rekonstruktion einer auf einem Aufnahmemedium erfaßten Bildinformation, bei dem die Bildrekonstruktion derart gesteuert wird, daß die spektrale Intensitätsverteilung und/oder die Farbkoordinaten und/oder die Helligkeit einer auf dem Aufnahmemedium erfaßten und rekonstruierten Lichtsignalinformation der des durch Mittel zur Erzeugung eines Lichtsignals generierten Lichtsignals oder der des zu diesem komplementären Lichtsignals entspricht, oder die Abweichung zwischen dem rekonstruierten und dem erzeugten Lichtsignal innerhalb eines Toleranzbereiches liegt oder minimiert wird.

Bei dem Aufnahmemedium kann es sich beispielsweise um einen Farbfilm oder auch um einen Schwarz-Weiß-Film handeln. Beliebige andere Aufnahmemedien sind ebenfalls einsetzbar.

Die vorliegende Erfindung betrifft ferner ein Verfahren zur Kalibrierung einer auf einem Aufnahmemedium aufgezeichneten Bildinformation, wobei die Abweichung des rekonstruierten Lichtsignals zu dem durch Mittel zur Erzeugung eines Lichtsignals generierten Lichtsignal oder dem zu diesem komplementären Lichtsignal parametrisch erfaßt wird und diese Parameter als Kalibrierungsparameter für die weitere Bildrekonstruktion bzw. Bildverarbeitung bereitgestellt werden.

Denkbar wäre beispielsweise, daß im Labor die Filme, beispielsweise Farbfilme wie üblich entwickelt werden, um den Prozeß nicht umzustellen oder zu verteuern. Dem Kunden können nun nach der Entwicklung die Kalibrierungsparameter ausgehändigt werden.

Besonders vorteilhaft ist es, wenn die Kalibrierungsparameter herangezogen werden, um die Abweichung des rekonstruierten Lichtsignals zu dem im Aufnahmegerät erzeugten Lichtsignal oder dem zu diesem komplementären Lichtsignal bei der Bildrekonstruktion zu minimieren. Der Kunde kann seine Dias oder Negative nun beispielsweise zu Hause einscannen und in einer entsprechenden Software die Kalibrierungsparameter eingeben. Die Software korrigiert anschließend entsprechend, wonach der Kunde ein optimiertes Ergebnis erhält.

Das erfindungsgemäße Verfahren eröffnet dem Entwickler die Möglichkeit, eine besonders genaue Reproduktion des Farbeindrucks bzw. der Helligkeit des aufgenommen Objektes bei der Filmentwicklung zu realisieren. Die Filmentwicklung selbst kann beispielsweise wie herkömmlich auf Fotopapier erfolgen oder auch eine computergestützte Bildentwicklung umfassen.

Das bei den erfindungsgemäßen Verfahren verwendete Lichtsignal, das Aufnahmemedium sowie das Aufnahmegerät sind vorzugsweise nach einem der Ansprüche 1 bis 18 ausgestaltet.

Weitere Einzelheiten und Vorteile der vorliegenden Erfindung werden anhand eines Ausführungsbeispiels näher erläutert.

Das Aufnahmegerät ist eine Fotokamera oder einfache CCD-Kamera mit einem Schwarz-Weiß-Film. Das Aufnahmegerät hat zwar einen spektralen Empfindlichkeitsbereich, erfaßt in diesem jedoch nur Intensitäten (Hell/Dunkel), d. h. der Empfindlichkeitsbereich ist nicht in einzelne Bereiche unterteilt, wie dies z. B. bei Farb-Aufnahmegeräten der Fall ist.

Die Kamera enthält eine Glühbirne, mittels derer weißes Licht erzeugt wird. Bei jeder Aufnahme oder auch nur einmalig zu Beginn eines Films wird ein entsprechendes weißes Lichtsignal generiert, das durch den Schwarz-Weiß-Film erfaßt wird. Die Leuchtdichte/Helligkeit, d. h. Intensität des Lichtsignals ist bekannt.

Bei der Reproduktion des Films, d. h. bei der Filmentwicklung wird der Film nun solange entwickelt, bis das generierte Lichtsignal, das auf dem Aufnahmemedium erfaßt ist, die bekannte Helligkeit aufweist. Dadurch wird sichergestellt, daß zumindest in diesem Intensitätsbereich eine originalgetreue Wiedergabe des Bildes gewährleistet ist.

Gemäß einem weiteren Ausführungsbeispiel handelt es sich um eine Fotokamera mit einem Farbfilm bzw. um eine Farb-CCD-Kamera. Ein derartiges Aufnahmegerät weist einen spektralen Emfpindlichkeitsbereich auf, der in mehrere spektrale Teilbereiche unterteilt ist. Diese Teilbereiche unterteilen sich in einen Rotanteil, einen Grünanteil und einen Blauanteil der aufgenommenen Bildinformation.

Das Aufnahmegerät weist eine Glühbirne auf, die weißes Licht bzw. nicht mit bekannter Intensitätsverteilung emittiert. Alternativ dazu können auch drei Leuchtdioden vorgesehen werden, von denen eine im roten, eine im grünen und eine im blauen Bereich emittiert.

Bei der Entwicklung eines derartigen Films kann durch entsprechende Belichtung erreicht werden, daß das Verhältnis der Farbkoordinaten zueinander gleichbleibt, d. h. das Verhältnis des Rot-, Grün- und Blauanteils wird bei der Reproduktion so gewählt, daß wieder ein weißes Lichtsignal entsteht. Bei der Verwendung von drei getrennten Leuchtdioden wird die Entwicklung derart vorgenommen, daß die entsprechend erzeugten Farbpunkte in entsprechender Farbe und entsprechendem Verhältnis ihrer Intensitäten, d. h. mit konstanten vorbekannten Farbkoordinaten, wieder erscheinen. Dadurch wird gewährleistet, daß bei der Bildrekonstruktion der Farbeindruck der aufgezeichneten Ausgangssituation, d. h. des aufgezeichneten Bildes, erhalten bleibt.

Gemäß einem weiteren Ausführungsbeispiel weist die obengenannte Farbfilmkamera Mittel zur Erzeugung eines Lichtsignals auf, das nicht nur hinsichtlich der Farbkoordinaten, sondern auch hinsichtlich der Leuchtdichte bekannt ist. Damit wird es möglich, nicht nur die Farbkoordinaten des oder der Lichtsignale wieder herzustellen, sondern bei der Entwicklung auch darauf zu achten, daß die Helligkeit der entsprechenden Signale wieder erreicht wird. Damit wird bei der Bildrekonstruktion auch der Helligkeitseindruck der aufgezeichneten Szene real vermittelt. Erfindungsgemäß ist es daher möglich, den Farb- und/oder den Helligkeitseindruck der aufgenommen Szene exakt wiederzugeben.

Ausgehend von dem im Aufnahmegerät generierten Signal ist es somit möglich, den Prozeß der Bildrekonstruktion so zu beeinflussen, daß der Farb- und/oder Intensitätseindruck der aufgezeichneten Bildsituation erhalten bleibt. Der Bildverarbeitungsprozeß kann beispielsweise auf fotochemischem Wege (Herstellung von Abzügen auf Fotopapier) oder auch bei der Bildverarbeitung am Computer erfolgen.

Wird bei der Aufzeichnung des Bildes der Blauanteil verhältnismäßig schlecht übertragen, beispielsweise weil die entsprechende Schicht des Farbfilmes gealtert ist oder weil ein entsprechender Empfänger eine zu geringe Temperatur aufweist, so verschiebt sich das Verhältnis zwischen den spektralen Teilbereichen zu Ungunsten des Blauanteils und der Farbeindruck verschiebt sich bei einer Standardbildrekonstruktion in den grünen und roten Bereich, wodurch entsprechend ein Grün- oder Rotstich des Bildes entsteht.

Bei der Bildrekonstruktion am Computer ist es erfindungsgemäß nunmehr nur noch nötig, bei Kenntnis des aufgezeichneten Kalibriersignals den Blauanteil derart anzuheben, daß das Verhältnis der einzelnen spektralen Farbbereiche rot, grün, blau im letztlich erzeugten, rekonstruierten Bild dem des generierten Lichtsignals entspricht. Das heißt es wird auf den Erhalt des Verhältnisses der einzelnen spektralen Bereiche, d. h. der Farbkoordinaten untereinander hin korrigiert. Diese Vorgehensweise erhält den Farbeindruck.

Wird zusätzlich zu diesem Verhältnis auch das absolute Niveau der Intensitäten, d. h. die Leuchtdichten, an das im Aufnahmegerät generierte Signal angepaßt, so wird das Bild auf den Helligkeitseindruck hin optimiert.

Beim fotochemischen Entwicklungsprozeß erfolgt eine Kompensation einer schwächeren Übertragung des Blauanteils durch eine Anhebung dieses spektralen Bereichs, z. B. durch eine verstärkte Belichtung des Fotopapiers in diesem Bereich, d. h. es wird länger "blau" belichtet, bzw. mit einer höheren Intensität gearbeitet. Entsprechendes gilt für die Komplementärfarbe des betreffenden spektralen Bereiches, je nachdem ob es sich um einen "Negativ- oder Positivprozeß" zur Herstelllung von Positiven oder Negativen handelt. Auch hier kann entsprechend bezüglich des Farb- und/oder Helligkeitseindrucks korrigiert werden.

Als Mittel zur Erzeugung eines Lichtsignals kommen z. B. Glühlampen oder Leuchtdioden in Betracht. Auch kann eine Signalfläche abgebildet werden, die sich am oder im Aufzeichnungsgerät befindet.

Um die nicht lineare Übertragung von Intensitäten zu korrigieren, können weiße Punkte verschiedener Intensitäten erzeugt werden, wodurch bei Schwarz-Weiß-Filmen entsprechende Schwärzungskurven aufgenommen werden können.

Die Mittel zur Erzeugung eines Lichtsignals können beispielsweise aus einer weißleuchtenden LED bestehen, die aus drei spektralen Einzelintensitäten besteht. Die LED kann direkt vor der Filmebene einer Filmkamera angeordnet sein. Paßt man bei der Bildrekonstruktion nicht nur den Farbton, sondern auch die Helligkeit des rekonstruierten weißen Punktes entsprechend an, so bleibt bei der Bildrekonstruktion entsprechend auch der Helligkeitseindruck erhalten.

Die vorliegende Erfindung ermöglicht es, durch die erfindungsgemäßen Mittel zur Erzeugung eines Lichtsignals mit bekannter spektraler Intensitätsverteilung und/oder bekannten Farbkoordinaten und/oder bekannter Leuchtdichte eine genaue Bildrekonstruktion bezüglich Farbeindruck und/oder Helligkeit zu ermöglichen. Die Mittel zur Erzeugung des Lichtsignals können im oder am Gerät angeordnet sein. Vorzugsweise befinden sie sich unmittelbar über der Ebene des Filmes.

Die vorliegende Erfindung ermöglicht die Erzeugung und Aufnahme eines definierten Kalibrierungs-Lichtsignals, die Messung der spektralen Übertragungsfunktion, d. h. der Frage, wie beispielsweise die einzelnen Farbanteile übertragen werden, sowie die Kompensation der spektralen Übertragungsfunktion bei der Bildrekonstruktion, z. B. Herstellung von Papierabzügen oder Korrektur der Farbdaten bei der Datenübergabe an einen Videobeamer oder einen Monitor oder an einen Farbdrucker.

## Patentansprüche

1. Aufnahmegerät zur Aufnahme einer Bildinformation,
**dadurch gekennzeichnet,**
**daß** das Aufnahmegerät ein oder mehrere Mittel zur Erzeugung eines Lichtsignals mit bekannter spektraler Intensitätsverteilung und/oder Farbkoordinaten und/oder Helligkeit aufweist, das durch ein in dem Aufnahmegerät angeordnetes oder darin aufnehmbares Aufnahmemedium erfaßbar ist.

2. Aufnahmegerät nach Anspruch 1, **dadurch gekennzeichnet, daß** das Lichtsignal Wellenlängen im sichtbaren Bereich oder im Bereich kürzerer Wellenlängen aufweist.

3. Aufnahmegerät nach Anspruch 1 oder 2, **dadurch gekennzeichnet, daß** das Lichtsignal aus weißem Licht besteht.

4. Aufnahmegerät nach einem der Ansprüche 1 bis 3, **dadurch gekennzeichnet, daß** durch die Mittel zur Erzeugung eines Lichtsignals mehrere getrennte Lichtsignale mit jeweils bekannten Farbkoordinaten erzeugbar sind, die von dem Aufnahmemedium erfaßbar sind.

5. Aufnahmegerät nach Anspruch 4, **dadurch gekennzeichnet, daß** mehrere räumlich und/oder spektral getrennte Lichtsignale erzeugbar sind.

6. Aufnahmegerät nach Anspruch 4 oder 5, **dadurch gekennzeichnet, daß** durch die Mittel zur Erzeugung eines Lichtsignals ein rotes, ein grünes und ein blaues Lichtsignal erzeugbar sind.

7. Aufnahmegerät nach Anspruch 6, **dadurch gekennzeichnet, daß** das rote, das grüne und das blaue Lichtsignal in ihrer Summe weißes Licht ergeben.

8. Aufnahmegerät nach Anspruch 4, **dadurch gekennzeichnet, daß** durch die Mittel zur Erzeugung eines Lichtsignals ein zu rot komplementäres, ein zu grün komplementäres und ein zu blau komplementäres Lichtsignal erzeugbar sind.

9. Aufnahmegerät nach einem der Ansprüche 4 bis 8, **dadurch gekennzeichnet, daß** durch die Mittel zur Erzeugung eines Lichtsignals Lichtsignale erzeugbar sind, die in ihrer Schwerpunktswellenlänge jeweils zwischen den spektralen Hauptempfindlichkeiten des Aufnahmemediums/Aufnahmegerätes liegen.

10. Aufnahmegerät nach einem der Ansprüche 1 bis 9, **dadurch gekennzeichnet, daß** das Aufnahmegerät eine analoge oder digitale Fotokamera, eine analoge oder digitale Filmkamera oder eine TV-Kamera ist.

11. Aufnahmegerät nach einem der Ansprüche 1 bis 10, **dadurch gekennzeichnet,**
**daß** die Mittel zur Erzeugung eines Lichtsignals derart ausgeführt sind, daß das Lichtsignal durch seine Helligkeit charakterisiert wird.

12. Aufnahmegerät nach Anspruch 11, **dadurch gekennzeichnet, daß** die Mittel zur Erzeugung eines Lichtsignals derart ausgeführt sind, daß zwei oder mehr voneinander getrennte Lichtsignale unterschiedlicher Helligkeit erzeugbar sind.

13. Aufnahmegerät nach Anspruch 12, **dadurch gekennzeichnet, daß** die Lichtsignale weißes Licht unterschiedlicher Helligkeit umfassen.

14. Aufnahmegerät nach einem der Ansprüche 1 bis 13, **dadurch gekennzeichnet,**
**daß** das Aufnahmegerät oder das Aufnahmemedium derart ausgeführt ist, daß die Erfassung der Bildinformation in mehreren spektralen Bereichen erfolgt.

15. Aufnahmegerät nach Anspruch 14, **dadurch gekennzeichnet, daß** die Erfassung der Bildinformationen in den drei spektralen Bereichen rot, grün und blau oder dazu komplementären Bereichen oder zwischen den Bereichen blau/grün und grün/rot oder dazu komplementären Bereichen erfolgt und die Mittel zur Erzeugung eines Lichtsignals derart ausgeführt sind, daß das Lichtsignal in jedem dieser spektralen Bereiche erfaßbar ist.

16. Aufnahmegerät nach einem der Ansprüche 1 bis 15, **dadurch gekennzeichnet, daß** die Bildinformation als Schwarz-Weiß-Bild erfaßbar ist und durch die Mittel zur Erzeugung eines Lichtsignals wenigstens zwei weiße Lichtsignale unterschiedlicher Helligkeit erzeugbar sind.

17. Aufnahmegerät nach einem der Ansprüche 1 bis 16, **dadurch gekennzeichnet,**
**daß** die Mittel zur Erzeugung eines Lichtsignals Leuchtdioden, Glühlampen, Laserdioden, Fluoreszenzdioden, Lumineszenzdioden, Glimmlampen oder andere Leuchtmittel umfassen.

18. Aufnahmegerät nach einem der Ansprüche 1 bis 17, **dadurch gekennzeichnet, daß** die Mittel zur Erzeugung eines Lichtsignals einen oder mehrere zwischen Leuchtmittel und Aufnahmemedium angeordnete Farb- und/oder Intensitätsfilter aufweisen.

19. Verfahren zur Rekonstruktion einer auf einem Aufnahmemedium aufgezeichneten Bildinformation,
**dadurch gekennzeichnet,**
**daß** die Bildrekonstruktion derart vorgenommen wird, daß die spektrale Intensitätsverteilung und/oder die Farbkoordinaten und/oder die Helligkeit einer auf dem Aufnahmemedium erfaßten und rekonstruierten Lichtsignalinformation der des durch Mittel zur Erzeugung eines Lichtsignals generierten Lichtsignals oder der des zu diesem komplementären Lichtsignals entspricht oder die Abweichung zwischen dem rekonstruierten und dem erzeugten Lichtsignal innerhalb eines Toleranzbereiches liegt oder minimiert wird.

20. Verfahren zur Kalibrierung einer auf einem Aufnahmemedium aufgezeichneten Bildinformation,
**dadurch gekennzeichnet,**
**daß** die Abweichung des rekonstruierten Lichtsignals zu dem durch Mittel zur Erzeugung eines Lichtsignals generierten Lichtsignal oder dem zu diesem komplementären Lichtsignal parametrisch erfaßt wird und diese Parameter als Kalibrierungsparameter für die weitere Bildrekonstruktion und/oder Bildverarbeitung bereitgestellt werden.

21. Verfahren nach Anspruch 20, **dadurch gekennzeichnet, daß** die Kalibrierungsparameter herangezogen werden, um die Abweichung des rekonstruierten Lichtsignals zu dem im Aufnahmegerät erzeugten Lichtsignal oder dem zu diesem komplementären Lichtsignal bei der Bildrekonstuktion zu minimieren.
